# EUROPÄISCHE PATENTSCHRIFT

(11) **EP 1 956 280 B1**
(45) Veröffentlichungstag und Bekanntmachung des Hinweises auf die Patenterteilung: **19.08.2009**
(21) Anmeldenummer: 08405020.2
(22) Anmeldetag: 21.01.2008
(51) Int. Cl.: F16L 37/47

(54) **Sicherheitskupplung für Druckluftleitungen**
Safety coupling for pressurised air ducts
Raccord de sécurité pour conduites d'air comprimé

(30) Priorität: 07.02.2007 CH 2062007; 30.05.2007 CH 8632007
(43) Veröffentlichungstag der Anmeldung: 13.08.2008
(73) Patentinhaber: Wütrich, Albrecht, 6110 Wolhusen (CH)
(72) Erfinder: Wütrich, Albrecht, 6110 Wolhusen (CH)
(74) Vertreter: Schneider Feldmann AG Patent- und Markenanwälte

(56) Entgegenhaltungen:
- EP-A- 0 406 203
- EP-A1- 0 327 494
- WO-A-20/05075868
- WO-A1-02/070941
- US-A1- 2004 051 070

## Beschreibung

Die vorliegende Erfindung betrifft eine steckbare Sicherheitskupplung für Druckluftleitungen mit steckbarem oder klemmendem Mittel zur Verbindung mit der Druckluftleitung, umfassend ein Kupplungsgehäuse mit Druckluftzuführungsbohrung und ein dichtend gelagertes Sperrelement mit Durchgangsbohrung, in die das Mittel dichtend einführbar ist, und wobei ferner das Kupplungsgehäuse eine dem Mittel als Kulissenführung dienende, ausgeschnittene Bahn aufweist, die im gekuppelten Zustand mindestens eine Schwenkbewegung des Mittels ermöglicht und dabei das Sperrelement von einer leitenden Position, in der die Durchgangsbohrung des Sperrelementes mit der Druckluftzuführungsbohrung des Kupplungsgehäuses kommuniziert, in eine sperrende Position, in der das Sperrelement die Druckluftzuführungsbohrung sperrt, bringbar ist.

Steckbare Sicherheitskupplungen für Druckluftleitungen mit einem Kupplungsgehäuse in dem ein Sperrelement schwenkbar gelagert ist und mittels einem darin einführbaren Stecker von einer sperrenden Lage in eine leitende Lage kommt beziehungsweise umgekehrt schwenkbar ist, ist seit längerem bekannt. Typische Beispiele solcher Sicherheitskupplungen zeigen die Dokumente CH-A-675619 oder die EP-B-327494. Hierbei sind die Sperrelemente jeweils als zylindrische Körper gestaltet, die im Kupplungsgehäuse mit Hilfe des einzuführenden Steckers verschwenkbar sind. Diese Art der Sicherheitskupplungen haben sich über Jahre hinweg erfolgreich auf dem Markt durchgesetzt.

Ein Problem, welches bei allen heute auf dem Markt erhältlichen Kupplungen für Druckluftleitungen nach wie vor vorhanden ist, besteht darin, dass die Entkupplung erfolgen kann, ohne dass dabei zuvor der vorhandene Druck in der Druckluftleitung vollständig abgebaut worden ist. Dies hat zur Folge, dass die expandierende Druckluft beim Entkuppeln einen Rückstoss verursacht, der so gross sein kann, dass der Schlauch dem Benutzer aus der Hand geschleudert wird und Verletzungen oder Beschädigungen verursachen kann.

Dieses Problem wurde erkannt und entsprechend zeigt beispielsweise die CH-A-675619 im Kupplungsgehäuse Entlastungsbohrungen auf. Diese Entlastungsbohrungen sind im dargestellten Beispiel nur während des Schwenkvorganges kurzzeitig in kommunizierender Verbindung mit dem Stecker. Im Entkupplungszustand besteht eine solche Verbindung nicht mehr. Da die Schwenkbewegung beim Entkuppeln sehr schnell und kurz erfolgt, kann sich insbesondere bei langen Druckluftleitungen der entsprechende Druck nur vollständig ungenügend abbauen. Die beschriebene Gefahr bleibt somit vollkommen bestehen.

Aehnlich problematisch ist auch die Lösung gemäss der EP-A-406203. Auch hier weist das Kupplungsgehäuse eine Druckentlastungsbohrung auf, wobei diese Bohrung praktisch erst im Endbereich der Entkupplung in kommunizierender Verbindung mit dem Stecker kommt, der in dieser Position nicht mehr gesichert ist, so dass die volle Rückschlagkraft der Druckluft den Stecker aus dem Sperrelement schleudert.

Ueblicherweise muss vor der Entkupplung die Druckluftleitung gesperrt werden um sicher zu stellen, dass nicht der volle anliegende Druck anliegt. Die schwenkbaren Kupplungen der hier beschriebenen Art erlauben nämlich eine praktisch kraftfreie Entkupplung auch bei hohem anliegendem Druck. Dies ist beispielsweise deutlich beschrieben in der EP-A-1364149. Jene Druckluftkupplung ist zusätzlich mit einem Verriegelungselement versehen, welches gelöst werden muss bevor der Stecker verschwenkt werden kann und sich somit entkuppeln lässt. Diese Sicherung, die betätigt werden muss um den Stecker zusammen mit dem Sperrelement von einer leitenden Position in eine sperrende Position zu bewegen, erhöht somit die Sicherheit. Problematisch ist bei diesen bedienungsfreundlichen Sicherheitskupplungen die Schnelligkeit der Entkupplung. Wie bereits erwähnt, erfolgt die Entkupplung lediglich durch eine in einem Bruchteil einer Sekunde durchgeführten Schwenkung. In dieser kurzen Zeit ist aber ein vollständiger Abbau des Druckes in der Zufuhrleitung nicht möglich.

Es ist folglich die Aufgabe der vorliegenden Erfindung eine Sicherheitskupplung für Druckluftleitungen der eingangs genannten Art derart zu verbessern, dass während der Entkupplung der in der Druckluftleitung vorhandene Ueberdruck mit grösserer Sicherheit abgebaut werden kann bevor der Stecker aus dem Sperrelement der Sicherheitskupplung herausgezogen werden kann.

Diese Aufgabe löst eine Sicherheitskupplung mit den Merkmalen des Patentanspruches 1.

In der Zeichnung ist ein bevorzugtes Ausführungsbeispiel des Erfindungsgegenstandes dargestellt und anhand der nachfolgenden Beschreibung detailliert erläutert. Es zeigt:
- Figur 1: eine perspektivische Darstellung der Sicherheitskupplung in der leitenden Position;
- Figur 2: einen Axialschnitt in einer geschwenkten Zwischenposition, während
- Figur 3: denselben vertikalen Axialschnitt in der Position des Richtungswechsels und
- Figur 4: wiederum einen Vertikal-/Axialschnitt durch die steckbare Sicherheitskupplung in der entkuppelbaren Position.
- Figur 5: zeigt einen Vertikalschnitt durch die Sicherheitskupplung unter Weglassung des Steckers in einer axialen Schnittebene ausserhalb des Bereiches der Kulissenführung.
- Figur 6: zeigt einen axialen Längsschnitt durch das Kupplungsgehäuse während
- Figur 7: dieses Kupplungsgehäuse in einer Seitenansicht und
- Figur 8: in einer perspektivischen Darstellung zeigt.
- Figur 9: zeigt einen Diametralschnitt durch eine auf dem Kupplungsgehäuse aufsetzbare Kappe, während
- Figur 10: diese Kappe in perspektivischer Darstellung zeigt.
- Figur 11: zeigt ebenfalls perspektivisch eine Lagerhülse in der das Sperrelement im Kupplungsgehäuse schwenkbeweglich lagert. Schliesslich zeigt
- Figur 12: ein Mittel als Spannzange zur klemmbaren Aufnahme einer steckerfreien Druckluftleitung.
- Figur 13: zeigt das Sperrelement für sich alleine in einem Diametralschnitt.
- Figur 14: zeigt eine alternative Arretierung eines Steckers relativ zum Kupplungsgehäuse. In
- Figur 15: ist eine steckerfreie Lösung perspektifisch dargestellt.
- Figur 16: zeigt eine solche Lösung in Seitenansicht mit geänderter Spannzange gemäss Figur 12.

Die erfindungsgemässe steckbare Sicherheitskupplung weist 5 Hauptelemente auf. Dies sind zum einen das Kupplungsgehäuse 2, in dem ein steckbares oder klemmendes Mittel 1 einführbar ist in ein Sperrelement 3, welches im Kupplungsgehäuse 2 schwenkbar gelagert ist. Dieses Sperrelement 3 liegt einerseits innen am Kupplungsgehäuse 2 an und ruht andererseits auf einer Lagerhülse 4, die im Kupplungsgehäuse 2 gehalten ist. Schliesslich ist über dem Kupplungsgehäuse 2 eine bewegliche Abdeckhaube 5 angebracht.

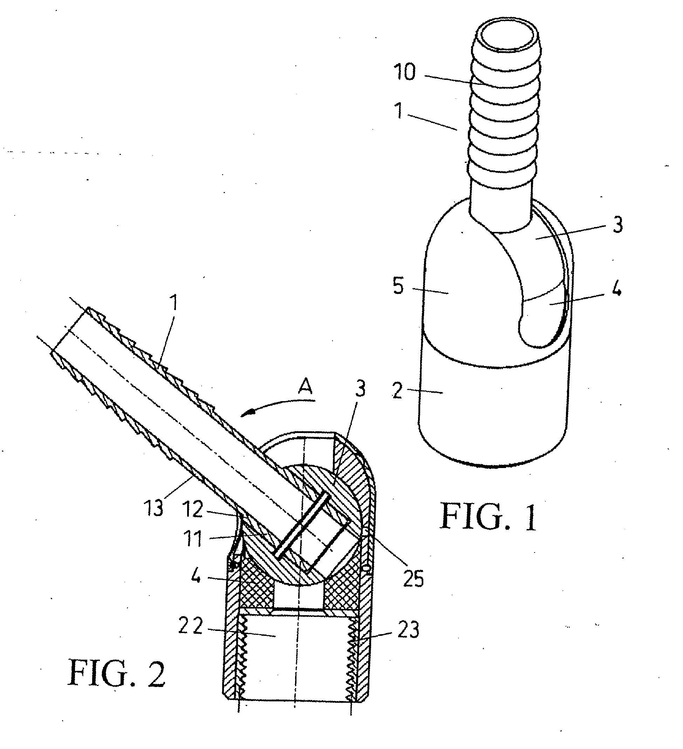

In der Figur 1 ist die steckbare Sicherheitskupplung für Druckluftleitungen in einer leitenden Position dargestellt.

Die eigentliche Druckluftleitung ist hierbei nicht gezeigt. Erkennbar ist jedoch das steckbare oder klemmende Mittel 1, welches im vorliegenden Fall ein Stecker ist, der eine sägezahnförmige Rippung 10 an jenem Ende aufweist, auf der die Druckluftleitung aufgesteckt wird. Die Druckluftleitung ist üblicherweise ein Kunststoffschlauch aufgeschoben, der dann mittels einer Schlauchbride darauf gesichert ist. Da die Gestaltung des Steckers bezüglich der vorliegenden Erfindung praktisch unerheblich ist und lediglich das Sperrelement, in dem der Stecker eingeführt wird, entsprechend darauf angepasst sein muss, ist den folgenden Figuren der Stecker in einer vereinfachten Gestaltungsform dargestellt. Bezüglich der Ausgestaltungsform des Steckers wird bei der Erläuterung der nachfolgenden Figuren 2 - 4 noch zu sprechen sein. Vom Kupplungsgehäuse 2 ist nur dessen Unterteil ersichtlich, da der obere Teil von der Abdeckhaube 5 überdeckt wird. Die Abdeckhaube besitzt eine bogenförmige Oeffnung, durch die man das Sperrelement 3 und die Lagerhülse 4 jeweils teilweise ersehen kann.

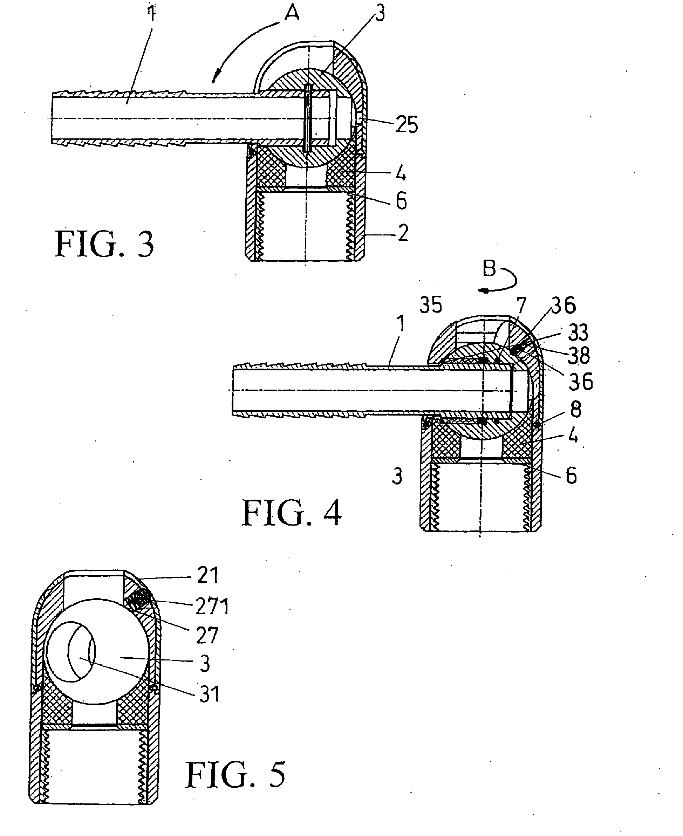

Im axialen Vertikalschnitt gemäss der Figur 2 ist nun der Stecker 1 in einer beliebigen Zwischenposition geschwenkt. In dieser Position verschliesst das Sperrelement 3 eine zentrische Oeffnung in der Lagerhülse 4, so dass nun die Zufuhrleitung von der nutseitigen Leitung getrennt ist. Wird schliesslich der Stecker 1, beispielsweise wie hier dargestellt, um 90° geschwenkt in eine Richtungswechslungsposition, so ist auch in dieser Position das Sperrelement 3 in einer Position, in der dieses die eingangsseitige Durchgangsöffnung sperrt, doch gleichzeitig befindet sich nun das Sperrelement 3 in einer Position, in der dessen Durchgangsbohrung mit einer Entlüftungsbohrung 25 im Kupplungsgehäuse 2 kommuniziert und damit der Druck von der nutseitigen Druckluftleitung abgebaut werden kann. Von der Druck entlastenden Position gemäss der Figur 3 kann nun der Stecker 1 und damit das Sperrelement 3 in eine entkuppelbare Position gebracht werden. Wie in den Figuren ersichtlich weist der Stecker 1 ein verdicktes Ende 11 auf, wodurch sich eine Schulter 12 im Uebergang zum dünnwandigen Bereich 13 des Steckers 1 bildet. Diese Schulter 12 liegt in allen Positionen und Zwischenpositionen auf der Innenseite des Kupplungsgehäuses 2 an, mit Ausnahme der Position in der der Stecker 1 zum Kuppeln oder Entkuppeln eingeführt oder herausgezogen werden kann, also in jener Position, die in der Figur 4 dargestellt ist. In dieser Position weist das Kupplungsgehäuse 2 eine um die Verdickung am Ende 11 erweiterte Oeffnung auf. Damit ist das steckbare oder klemmende Mittel 1 auch dann gesichert, wenn die Druckentlastung über die Entlüftungsbohrung 25 erfolgt. Da dies zudem eine Position ist, in der eine Richtungsänderung erfolgen soll, ist auch sichergestellt, dass eine genügende Zeit verbleibt, um den vorhandenen Druck in der Druckluftleitung, die abgekoppelt werden soll, abzubauen.

In den Figuren 2-4 ist im Sperrelement 3 eine Ringnut eingeformt, in der ein Dichtring eingelegt ist, der das Mittel 1 beziehungsweise Stecker gegenüber dem Sperrelement 3 abdichtet.

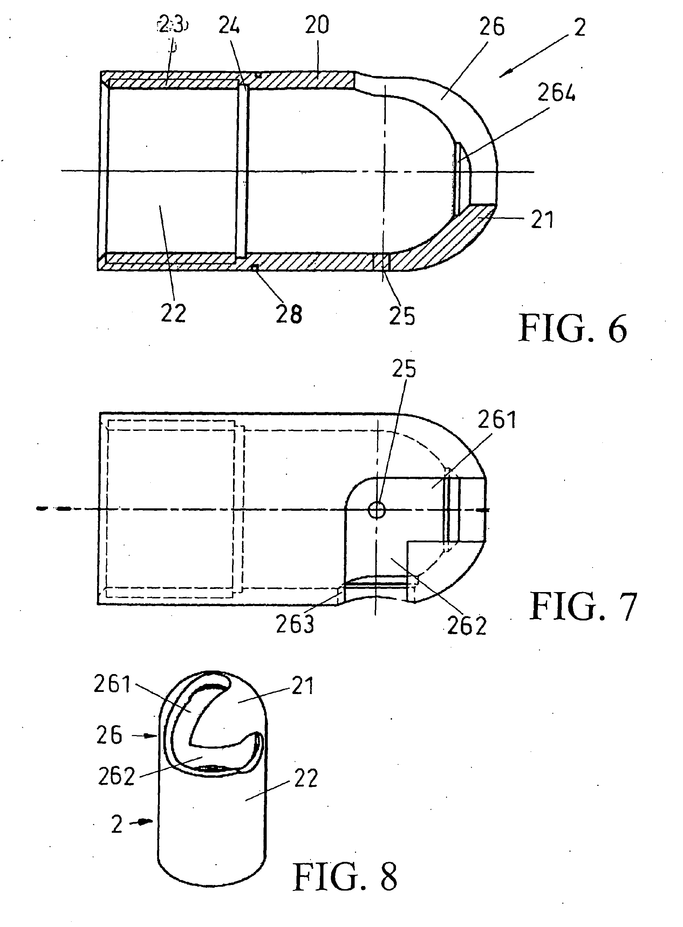

In den Figuren 6-8 ist das Kupplungsgehäuse 2 der erfindungsgemässen Sicherheitskupplung im Detail dargestellt. Das Kupplungsgehäuse 2 besitzt eine zylindrische Wand 20, die an einem Ende 21 kuppelförmig geschlossen ist. Dem kuppelförmigen Ende 21 gegenüber, befindet sich die Druckluftzuführungsbohrung 22, die mit einem Innengewinde 23 versehen ist. Die Druckluftzuführungsbohrung 22, die bis zum kuppelförmigen Ende 21 reicht, hat im Uebergangsbereich vom Innengewinde 23 zur glatten Innenwand eine Ringnut 24. Diese Ringnut 24 dient dazu, ein Sicherungsmittel, wie beispielsweise einen Segerring aufzunehmen, der eine noch zu beschreibende Lagerhülse 4 in seiner Position hält. Ferner ist das Kupplungsgehäuse 2 mit einer Kulissenführung 26 versehen. Die Kulissenführung 26 kann im Prinzip praktisch eine beliebige Form aufweisen, die von einem geraden Verlauf abweicht und somit zwangsläufig eine Richtungsänderung verlangt. Diese Richtungsänderung in der Kulissenführung ist bevorzugterweise möglichst winklig gestaltet, um zu vermeiden, dass der Benützer praktisch in einer durchgehenden Bewegung das im Kupplungsgehäuse beziehungsweise im Sperrelement lagernde steckbare oder klemmende Mittel durchgehend von der leitenden Position in die sperrende und entkuppelbare Position führbar ist.

Ist die Richtungsänderung nicht abrupt sondern eher kontinuierlich, so kann in der Kulissenführung eine zwangsweise Einrastung vorgesehen sein, z.B. durch eine Vertiefung entsprechend jener Vertiefung 264 in der leitenden Position, in die die Schulter 12 des Mittels 1 bei der Schwenkbewegung automatisch einrastet. In dieser Position kommuniziert die Durchgangsbohrung 31 des Sperrelementes 3 mit der Entlüftungsbohrung 25. Ist der Druck im Druckluftschlauch, der abgekoppelt wird, abgebaut, lässt sich das Mittel 1 in die Vertiefung drücken und das Mittel 1 in die Entriegelungsstellung weiterschwenken.

Im hier dargestellten Beispiel verläuft die Kulissenführung rechtwinklig, wobei in einer ersten Bewegung das Mittel 1 in einem ersten Führungsbahnabschnitt 261 der Kulissenführung 26 so schwenkbar ist, dass das Mittel 1 von einer axialen Ausrichtung, bei der das Mittel beziehungsweise der Stecker 1 mit der Druckluftzuführungsbohrung 22 genau fluchtend ausgerichtet ist, in einer senkrecht dazu verlaufenden Richtung verschwenkbar ist. Befindet sich das Mittel beziehungsweise der Stecker 1 in dieser Lage, so befindet er sich in einer Position, in der ein Richtungswechsel erfolgen muss. In dieser Position erfolgt gleichzeitig eine Druckentlastung im abzukuppelnden Teil der Druckluftleitung.

Hierzu ist im Gehäuse eine entsprechende Entlüftungsbohrung 25 vorhanden. Diese Entlüftungsbohrung ist mit 25 bezeichnet. Nach dem Richtungswechsel wird das Mittel, beziehungsweise der Stecker 1 durch den zweiten Führungsbahnabschnitt 262 gleitend geführt. Der zweite Führungsbahnabschnitt 262 endet in einem erweiterten Entkupplungsbereich 263.

Letztlich kann das Kupplungsgehäuse 2 sowohl im Bereich der definierten leitenden Lage, als auch im Bereich in dem die Richtungsänderung stattfindet, mit muldenförmigen Vertiefungen 264 versehen sein, in der die Schulter 12 des Mittels beziehungsweise Steckers 1 formschlüssig einzurasten vermag, einerseits unter dem Druck der Druckluft und andererseits unter Einwirkung einer Feder, die im Sperrorgan 3 gelagert sein kann und auf das Ende des Steckers beziehungsweise des Mittels 1 wirkt. Insbesondere die Anbringung einer solchen muldenförmigen Vertiefung 264 in jenem Bereich der Kulissenführung, in welcher die Richtungsänderung stattfindet, garantiert, dass hierdurch im Bewegungsablauf zwangsläufig ein Zwischenhalt stattfindet, wobei hierdurch die Verweilzeit, in der der noch vorhandene Ueberdruck in der Druckleitung entlastet werden kann, verlängert wird.

In der Zwischenposition gemäss der Figur 5 ist ersichtlich, dass das Kupplungsgehäuse 2 mit einer von aussen im Bereich des kuppelförmigen Endes 21 eine Sacklochbohrung 27 angebracht ist, in der unter Federdruck eine Kugel 271 lagert.

Ueber das kuppelförmige Ende 21 des Kupplungsgehäuses 2 ist eine Abdeckhaube 5 gelagert. Diese Abdeckhaube 5 besitzt einen zylindrischen unteren offenen Bereich 51, an dem der domförmige Bereich 52 anschliesst. Von der Spitze dieses domförmigen Bereiches 52 in den zylindrischen Bereich 51 führt eine viertelkreisförmige Ausnehmung 53. Diese Ausnehmung 53 ist an jenem Ende, das im zylindrischen Bereich. 51 liegt, mit einer Erweiterung 54 versehen, um eine einwandfreie Einführung und Entkupplung des Mittels beziehungsweise Steckers 1 sicher zu stellen.

Ferner erkennt man im dom- oder kuppelförmigen Bereich 52 der Abdeckhaube 5 eine teilweise umlaufende Bahn 55, in der in montiertem Zustand die bereits erwähnte Kugel 271 eingreift, welche in der Sacklochbohrung 27 unter Federdruck lagert und in diese Bahn 55 hineingepresst wird. Durch diese Lösung wird sicher gestellt, dass im entkuppelten Zustand die Abdeckhaube 5 nicht in eine beliebige Position verschoben werden kann.

Die Abdeckhaube 5 deckt auch die Entlüftungsbohrung 25 ab. Entsprechend muss die Haube 5 das Kupplungsgehäuse 2 mit Spiel von mehreren Zehntel Millimeter Abstand überdecken.

Die Ueberdeckung ist aber gewollt, da der Druck, der abgebaut werden soll, erheblich ist und ein scharfer Luftstrahl aus der Entlüftungsbohrung 25 den Benutzer verletzen könnte. Die Lösung mit dem überdeckten Luftstrahl führt zu einem diffusen Luftstrom.

Die Abdeckhaube 5 lässt sich auf dem Kupplungsgehäuse 2 auf verschiedene Arten sichern. Im Prinzip muss die Abdeckhaube 5 drehbar gelagert und lediglich gegen ein ungewolltes Lösen gesichert sein. Hierzu dient beispielsweise wie hier dargestellt, eine am unteren Rand, im zylindrischen Bereich 51, auf der Innenseite angebrachte Ringnut 56. In dieser Ringnut 56 kann ein entsprechend eingelegter O-Ring gehalten sein, der wiederum in einer Ringnut 28 auf der Aussenseite des Kupplungsgehäuses 2 eingreift.

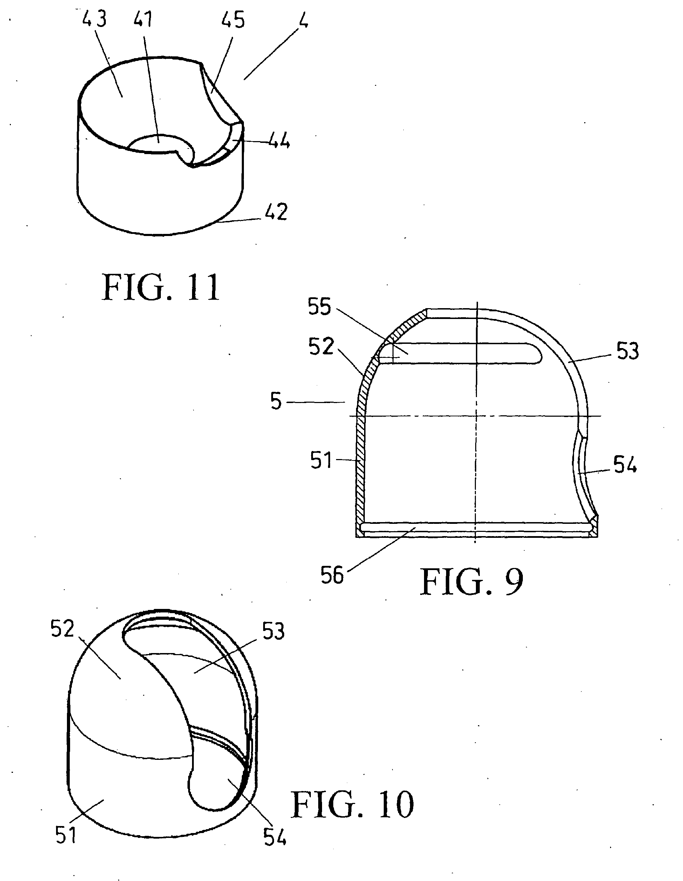

Das Sperrelement 3 ist im Kupplungsgehäuse 2 drehbar gelagert. Dieses Sperrelement 3 muss eine Kugel sein, die achsfrei gelagert ist und somit Schwenkbewegungen des Mittels 1 in verschiedene Richtungen zu folgen vermag. Entsprechend lagert dieses kugelförmige Sperrelement in einer Lagerhülse 4, die in der Figur 11 im Detail dargestellt ist. Die Lagerhülse 4 ist im Aussendurchmesser dem Innendurchmesser der Druckluftzuführungsbohrung 22 im Kupplungsgehäuse 2 angepasst. In ihrer Lage wird die Lagerhülse 4 durch einen Haltering, beispielsweise einen Segerring 6 gesichert. Dieser Segerring 6 greift dabei in die bereits erwähnte Ringnut 24 ein. Die Lagerhülse 4 kann aus Metall oder aus einem Kunststoff mit entsprechend elastischen Eigenschaften gefertigt sein. Die Lagerhülse besteht im Wesentlichen aus einem kreiszylindrischen Abschnitt mit einer zentrischen Durchgangsöffnung 41. Während das zur Eintrittsöffnung der Druckluftzuführungsbohrung 22 gerichtete Ende als plane Endfläche 42 gestaltet ist, ist das gegenüberliegende Ende als sphärisch, konkav geformte Lagerfläche 43 gestaltet. Die zentrische Durchgangsöffnung 41 entspricht im Durchmesser mindestens annähernd der lichten Weite der Durchgangsbohrung im Sperrelement 3. Die Lagerhülse 4 weist eine randseitige Ausnehmung 44 auf, die bei 45 etwas erweitert ist. Diese randseitige Ausnehmung 44 ist erforderlich falls, wie hier der Fall, die Kulissenführung so verläuft, dass der Stecker bei der Schwenkbewegung innerhalb der Kulisse in den Bereich der Lagerhülse kommt. Die Erweiterung 45 deutet jene Stelle an, welcher der erweiterte Entkupplungsbereich 263 des Kupplungsgehäuses 2 entspricht.

Das hier dargestellte Ausführungsbeispiel der Lagerhülse ist aus einem elastischen Kunststoff gefertigt. Im montierten Zustand liegt somit das Sperrelement 3 unter Druck in der sphärisch konkaven Lagerfläche 43 einerseits und anderseits mit Druck auf der Innenseite des kuppelförmigen Endes 21. Dank dieser elastischen unter Druck anliegenden Lagerhülse 4, wird keine zusätzliche Dichtung mehr erfordert. Die Lagerhülse 4 ist in diesem Falle selbst auch das Dichtungsmittel.

Die Lagerhülse 4 kann jedoch auch aus Metall sein. In diesem Falle, müssen dann entsprechend zusätzliche Dichtungsmittel vorgesehen werden. Dies können beispielsweise ein oder zwei konzentrische O-Ringe sein, die in entsprechenden Nuten in der sphärischen Lagerfläche 43 konzentrisch um die Durchgangsöffnung 41 lagern.

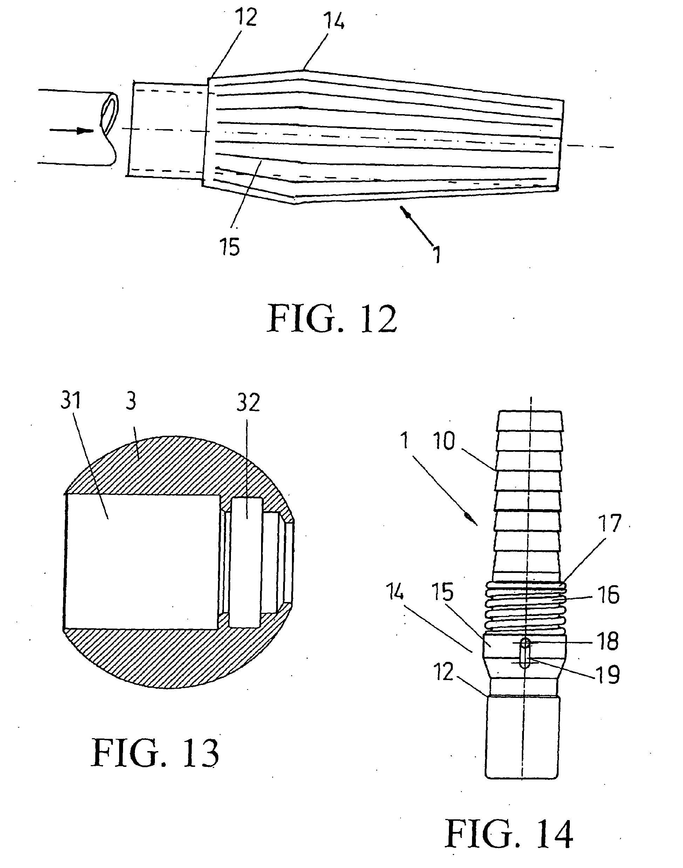

Im Apparatebau werden oftmals pneumatische Steuerungen mit Druckluftleitungen realisiert, wobei diese Druckluftleitungen steckerfrei gekoppelt werden. Hierzu wird das entsprechende Druckluftschlauchende direkt in ein klemmendes Mittel 1 eingeführt. Dieses klemmende Mittel 1 ist im Wesentlichen eine Spannzange 100 wie in Figur 12 dargestellt. Diese hat wiederum einführungsseitig ähnlich einem Stecker eine Schulter 120, die zur Sicherung des Mittels 1 im Kupplungsgehäuse 2 dient. Anschliessend an dieser Schulter 120 folgt ein radial elastischer Körper 130. Die radiale Elastizität des äusserlich eine Verdickung 140 aufweisenden Körper 130 ergibt sich durch eine Vielzahl von axial verlaufenden Längseinschnitten 150. Wird der Körper 130 in die Durchgangsbohrung des Sperrelementes 3 eingeführt, so wird der Körper 130 im Bereich der Verdickung 140 zusammen gepresst und damit der innere Durchgang reduziert und so der darin befindliche Schlauch klemmend gehalten. Im Prinzip wird der Schlauch, der gekoppelt werden soll, vorerst mit seinem freien Ende in die Spannzange 100 eingeführt und danach erfolgt die Betätigung exakt gleich wie bei einer Druckluftleitung mit daran angebrachtem Stecker.

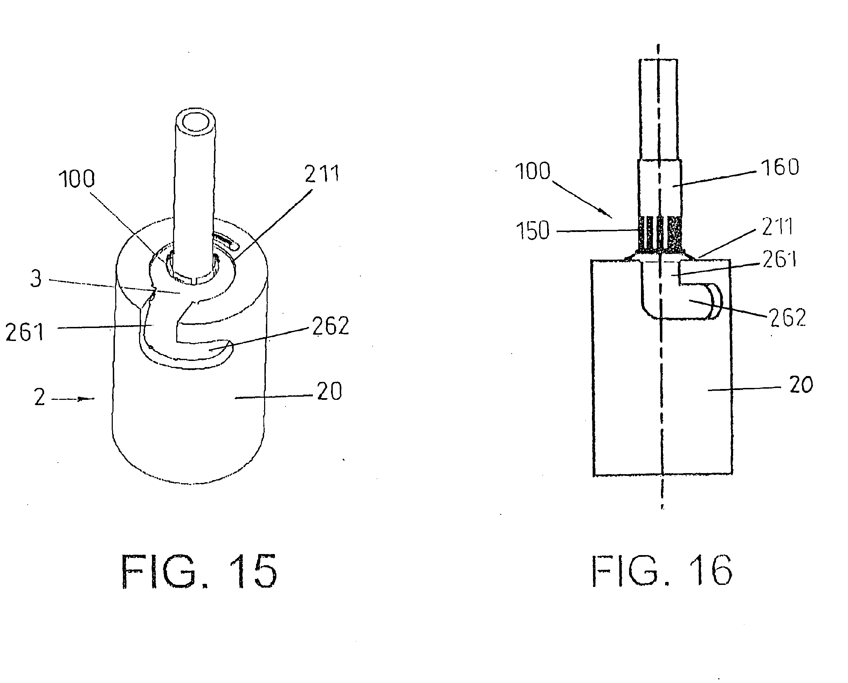

Wie bereits erwähnt ist der Einsatz von Spannzangen 100 als klemmendes Mittel besonders sinnvoll bei pneumatischen Steuerungen. Hierbei ist die Gefahr, dass der Druckluftschlauch geknickt wird besonders gross. In den Figuren 15 und 16 sind daher Alternativen aufgezeigt, die für dieses Problem Abhilfe schaffen.

Das Kupplungsgehäuse 20 ist innen gleich gestaltet wie zuvor beschrieben, doch ist das obere Ende in dem der zu kuppelnde Schlauch eingeführt wird flach gestaltet. In dieser, der Druckluftzuführungsbohrung 22 gegenüberliegenden Seite, ist nun eine vergrösserte Oeffnung 211 eingeformt. Aus dieser Oeffnung 211 ragt das Sperrelement 3 geringfügig hinaus. Somit kann der im Sperrelement 3 mittels einer Spannzange 100 gehaltene Schlauch in einem begrenzten Mass allseitig geschwenkt werden, wodurch die Gefahr einer Knickung der Leitung wesentlich reduziert wird. Die Schwenkung wird praktisch dadurch begrenzt, dass der Schlauch oder der obere Rand der Spannzange 100 am Gehäuse einen Anschlag findet.

Zur Betätigung der Kupplung wird normalerweise der Stecker bewegt. Bei den steckerfreien Lösungen erfolgt die Betätigung über den Schlauch. Bei weicheren, hochflexiblen Schläuchen wie sie in der Pneumatik verwendet werden, ist dies problematisch. Daher wird vorgeschlagen die Spannzange 100 mit einer hülsenförmigen Verlängerung 160 zu versehen, durch die der Schlauch in die Spannzange eingeführt ist und wobei diese Verlängerung 160 als stabiler Griff dient. Um die Anpassbarkeit der Spannzange an den Schlauch im klemmenden radial elastischen Körper 130 nicht zu mindern, sind die Längseinschnitte 150 der Spannzange in den Bereich der hülsenförmigen Verlängerung 160 hinein laufend gestaltet.

Schliesslich ist in der Figur 13 auch noch ein Ausführungsbeispiel eines Sperrelementes 3 dargestellt. Das Sperrelement 3 besitzt eine Durchgangsbohrung 31, in die der Stecker beziehungsweise das klemmende Mittel 1 einführbar ist. In einem Bereich weist diese Durchgangsbohrung 31 eine Erweiterung 32, die zur Einlegung eines Federelementes dient. Das hier nicht dargestellte Federelement, das entweder ein gummielastischer Ring oder eine zylindrische Druckfeder ist, muss bei der Einführung des Steckers beziehungsweise des klemmenden Mittels 1 zusammengedrückt werden und zusammengedrückt gehalten werden, bis eine gewisse Verschwenkung stattgefunden hat und so die bereits erwähnte Schulter 12' im Bereich der Kulissenführung am Rand anliegt und somit in der Position gesichert ist. Sobald der Stecker beziehungsweise das klemmende Mittel 1 vollständig in die leitende Lage geschwenkt worden ist, drückt die Feder in der Ausnehmung 32 die Schulter 12 des Steckers in die bereits erwähnte Vertiefung 264, die somit eine rastende Wirkung sicherstellt. Da in dieser Ausführungsform die Feder als gummielastischer Ring gestaltet ist, wirkt dieser auch als Dichtring.

Die Durchgangsbohrung 31 im Sperrelement 3 kann auch einen konischen Anzug aufweisen. Hierdurch lässt sich bewirken, dass ein Mittel 1 in der Form einer Spannzange gemäss Figur 12 bei der Schwenkung des Mittels 1 zusammenpresst, da die Schulter 12 am Rand der Kulissenführung anliegend die Spannzange weiter in das Sperrelement stösst. Hierzu muss der Rand der Kulissenführung mit einem gewissen Anzug versehen sein, das heisst, die Wandstärke am Rand der Kulissenführung von der Entriegelungs- und Einfuhrposition in die Richtung zum ersten Richtungswechsel zunimmt.

Bei grossen Kupplungen ist der anliegende Druck meist derart gross, dass eine Verriegelung im Kupplungsgehäuse auf der Innenseite nicht sinnvoll ist. Gegen den anliegenden Druck lässt sich der Stecker kaum aus der muldenförmigen Vertiefung 264 hinauspressen. Für solche Kupplungen zeigt die Figur 14 eine Alternative. Hier muss eine muldenförmige Vertiefung auf der Aussenseite des Kupplungsgehäuses 2 angebracht werden.

Der Stecker 1 weist in diesem Fall eine konische Verriegelungshülse 14 auf, die mit einem Griffbereich 15 versehen sein kann. Eine Druckfeder 16, die sich auf einen Stützring 17 abstützen kann, drückt in der leitenden Lage der Sicherheitskupplung die Verriegelungshülse in die muldenförmige Vertiefung. So lässt sich eine Entriegelung ohne Kraftaufwand realisieren. Der Kraftaufwand der Schwenkung des Sperrelementes 3 in die sperrende Lage erfolgt, wie bei der zuvor beschriebenen Ausführung, mit geringer Kraft.

Die Begrenzung des Verschiebeweges der Verriegelungshülse erfolgt durch einen Anschlagstift 18, der ein Langloch in der Verriegelungshülse 14 durchsetzt.

Schliesslich soll auch noch sichergestellt werden, dass das Sperrelement im ausgekuppelten Zustand sich nicht aus dieser Lage verschiebt. In einem gewissen Mass ist dies bereits gesichert durch die Lagerhülse 4, die auf den Sperrkörper drückt. Diese Sicherung kann aber zusätzlich durch verschiedene Varianten verbessert werden. In der Figur 4 sind zwei verschiedene Möglichkeiten dargestellt, von denen man jedoch bevorzugt nur eine auswählen wird.

In einer ersten Variante ist im Sperrkörper 3 eine Rasthülse 33 vorgesehen, auf die eine Feder 34, beispielsweise ein Gummiring drückt. In der Auskupplungslage wird somit diese Rasthülse 33 in eine Rastkerbe 35 geschoben, die nicht scharfkantig ist. Somit kann die Rasthülse 35 ohne zusätzliche Mittel beim Verschwenken des Mittels 1 wieder aus dieser Rastkerbe 35 hinausgleiten gegen den Widerstand der Feder 34.
In einer zweiten Variante ist ein Gewindeloch 36 im Kupplungsgehäuse vorgesehen, in dem eine Kugel 37 unter Druck einer Feder 38 liegt. Die Kugel 37 wird in der Entkupplungsposition in eine Senke 40 im Sperrkörper 3 (siehe Fig. 13) gedrückt. Eine Madenschraube 39 ermöglicht die Einstellung der Einrastkraft.

### Bezugszeichenliste:

- 1: steckbares oder klemmendes Mittel, Stecker oder Spannzange
- 2: Kupplungsgehäuse
- 3: Sperrelemente
- 4: Lagerhülse
- 5: Abdeckhaube
- 6: Haltering
- 7: Dichtring

### 1 Stecker

- 10: sägezahnförmige Rippung
- 11: verdicktes Ende
- 12: Schulter
- 13: dünnwandiger Bereich
- 14: Verriegelungshülse
- 15: Griffbereich
- 16: Druckfeder
- 17: Stützring
- 18: Anschlagstift
- 19: Langloch

### 2 Kupplungsgehäuse

- 20: zylindrische Wand
- 21: kuppelförmiges Ende
- 211: erweiterte Oeffnung
- 22: Druckluftzuführungsbohrung
- 23: Innengewinde
- 24: Ringnut
- 25: Entlüftungsbohrung
- 26: Kulissenführung
- 261: erster Führungsbahnabschnitt
- 262: zweiter Führungsbahnabschnitt
- 263: erweiterter Entkupplungsbereich
- 264: muldenförmige Vertiefung
- 27: Sacklochbohrung
- 271: Kugel
- 28: Ringnut

### 3 Sperrelement

- 31: Durchgangsbohrung
- 32: Erweiterung
- 33: Rasthülse
- 34: Feder
- 35: Rastkerbe
- 36: Gewindeloch
- 37: Kugel
- 38: Feder
- 39: Madenschraube
- 40: Senke

### 4 Lagerhülse

- 41: zentrische Durchgangsöffnung
- 42: plane Endfläche
- 43: sphärische, konkave Lagerfläche
- 44: randseitige Ausnehmung

### Mittel als Spannzange

- 100: Spannzange
- 120: Schulter an Spannzange
- 130: Körper radial elastisch
- 140: Verdickung
- 150: Längseinschnitte
- 160: hülsenförmige Verlängerung

### 5 Abdeckhaube

- 51: zylindrischer Bereich
- 52: domförmiger Bereich
- 53: Ausnehmung
- 54: Erweiterung
- 55: Bahn

## Patentansprüche

1. Steckbare Sicherheitskupplung für Druckluftleitungen mit steckbarem oder klemmendem Mittel (1) zur Verbindung mit der Druckluftleitung, umfassend ein Kupplungsgehäuse (2) mit Druckluftzuführungsbohrung (22) und ein dichtend gelagertes Sperrelement (3) mit Durchgangsbohrung (31), in die das Mittel (1) dichtend einführbar ist und wobei ferner das Kupplungsgehäuse (2) eine dem Mittel (1) als Kulissenführung (26) dienende, ausgeschnittene Bahn aufweist, die in gekuppeltem Zustand mindestens eine Schwenkbewegung des Mittels (1) ermöglicht und damit das Sperrelement (3) von einer leitenden Position, in der die Durchgangsbohrung (31) des Sperrelementes (3) mit der Druckluftzuführungsbohrung (22) des Kupplungsgehäuses (2) kommuniziert, in eine sperrende Position, in der das Sperrelement (3) die Druckluftzuführungsbohrung (22) sperrt, bringbar ist, **dadurch gekennzeichnet, dass** das Sperrelement (3) eine allseitig schwenkbare Kugel ist, und die Kulissenführung (26,261,262) im Verlauf mindestens einen Richtungswechsel aufweist, wobei in der Position des mindestens einen Richtungswechsels die Durchgangsbohrung (31) des Sperrelementes (3) mit mindestens einer Entlüftungsbohrung (25) kommuniziert.

2. Sicherheitskupplung nach Anspruch 1, **dadurch gekennzeichnet, dass** das Kupplungsgehäuse eine vorzugsweise zylindrische Innenform aufweist und an der der Eintrittsseite der Druckluftzuführungsbohrung (22) gegenüberliegenden Seite innen ein kuppelförmiges Ende (21) als gewölbte Lagerfläche für das kugelförmige Sperrelement (3) aufweist.

3. Sicherungskupplung nach Anspruch 2 **dadurch gekennzeichnet, dass** das Kupplungsgehäuse an der der Druckluftzuführungsbohrung (22) gegenüberliegenden Seite eine Oeffnung (211) aufweist, die im Durchmesser grösser ist, als die Breite der als Kulissenführung dienenden ausgeschnittenen Bahn und somit eine begrenzte allseitige Schwenkbewegung des Mittels (1) in der leitenden, gekoppelten Position erlaubt.

4. Sicherheitskupplung nach Anspruch 1, **dadurch gekennzeichnet, dass** im Kupplungsgehäuse (2) eine Lagerhülse (4) gehalten ist, die eine sphärisch konkav geformte Lagerfläche (43) für das Sperrelement (3) bildet, und eine Durchgangsöffnung (41) aufweist, deren Durchmesser annähernd der lichten Weite der Durchgangsbohrung (31) im Sperrelement (3) entspricht.

5. Sicherheitskupplung nach Anspruch 1, **dadurch gekennzeichnet, dass** in der Lagerfläche (43) der Lagerhülse (4) mindestens eine Ringnut eingeformt ist, welche konzentrisch um die Durchgangsöffnung (41) verläuft und in der ein O-Ring zur Dichtung lagert.

6. Sicherheitskupplung nach Anspruch 1, **dadurch gekennzeichnet, dass** im Sperrelement (3) eine Druckfeder gelagert ist, die beim Einführen des Mittels (1) in das Sperrelement (3) zusammengedrückt wird und das Mittel (1) gegen den inneren Rand der Kulissenführung (26) presst.

7. Sicherheitskupplung nach Anspruch 6, **dadurch gekennzeichnet, dass** im Kupplungsgehäuse (2) mindestens eine muldenförmige Vertiefung (264) eingeformt ist, in die eine am Mittel (1) vorgesehene Schulter (12) in der leitenden Position unter Druck der Druckfeder einrastet.

8. Sicherheitskupplung nach Anspruch 6, **dadurch gekennzeichnet, dass** im Kupplungsgehäuse mindestens eine weitere muldenförmige Vertiefung angeformt ist, in die eine am Mittel vorgesehene Schulter (12) in der Position des Richtungswechsels unter Druck der Druckfeder einrastet.

9. Sicherheitskupplung nach Anspruch 1, **dadurch gekennzeichnet, dass** im Kupplungsgehäuse (2) mindestens eine Entlüftungsbohrung (25) vorhanden ist, die in der Position des Richtungswechsels mit der Durchgangsbohrung (31) des Sperrelementes (3) kommuniziert.

10. Sicherheitskupplung nach Anspruch 1, **dadurch gekennzeichnet, dass** das Kupplungsgehäuse (2) mit einer um deren Längsachse drehbar gelagerten Abdeckhaube (5) versehen ist, welche in der Position des Richtungswechsels die Entlüftungsbohrung (25) distanziert abdeckt und eine schlitzförmige Ausnehmung (53) aufweist, die in der Breite der Breite der Kulissenführung (26) entspricht und so gestaltet ist, dass das durchgeführte Mittel (1) alle Bewegungen in der Kulissenführung (26) des Kupplungsgehäuses (2) zulässt.

11. Sicherheitskupplung nach Anspruch 10, **dadurch gekennzeichnet, dass** die Abdeckhaube (5) Formmittel aufweist, die in einer Ringnut an der Aussenseite des Kupplungsgehäuses eingreifen

12. Sicherheitskupplung nach Anspruch 11, **dadurch gekennzeichnet, dass** die Formmittel (8) ein Segerring, ein Sprengring, ein O-Ring oder an der Abdeckhaube (5) angeformte federnde Klauen sind.

13. Sicherheitskupplung nach Anspruch 10, **dadurch gekennzeichnet, dass** die Ausnehmung (53) einen bogenförmigen Verlauf um 90° von der Spitze der sphärisch geformten Abdeckhaube (5) in einer Diametralebene verlaufend aufweist.

14. Sicherheitskupplung nach Anspruch 1, **dadurch gekennzeichnet, dass** das steckbare oder klemmbare Mittel (1) ein handelsüblicher Druckluft-Kupplungsstecker ist.

15. Sicherheitskupplung nach Anspruch 1, **dadurch gekennzeichnet, dass** das Mittel eine im Sperrelement gehaltene oder einführbare Spannzange (100) ist, welches eine steckerlose Druckluftleitung dichtend und kraftschlüssig zu halten vermag.

16. Sicherungskupplung nach den Ansprüchen 3 und 15,
**dadurch gekennzeichnet, dass** die Spannzange (100) mit einer hülsenförmigen Verlängerung (160) versehen ist, wobei in den Spannzange (100) verlaufende Längseinschnitte (150) sich ein Stück weit in die Verlängerung (160) hinein erstrecken und der Durchmesser der Verlängerung (160) der Breite der Führungsbahnabschnitte (261,262) entspricht.

17. Sicherheitskupplung nach Anspruch 1, **dadurch gekennzeichnet, dass** das Kupplungsgehäuse (2) auf der Aussenseite eine muldenförmige Vertiefung aufweist und der Stecker (1) eine konische Verriegelungshülse (14) besitzt, die gegen den Druck einer Druckfeder (16) die Verriegelungshülse in die aussen eingeformte muldenförmige Vertiefung drückt, wenn sich der Stecker (1) in der leitenden Position befindet.

18. Sicherheitskupplung nach Anspruch 17, **dadurch gekennzeichnet, dass** der Verschiebeweg der Verriegelungshülse (14) durch einen Anschlagstift (18) am Stecker (1), der in ein Langloch in der Verriegelungshülse (14) greift, begrenzt wird.

19. Sicherheitskupplung nach Anspruch 9, **dadurch gekennzeichnet, dass** in der Abdeckhaube (5) eine Bahn (55) eingeformt ist, die mit einer darin eingreifenden Kugel (271), die in einer Sacklochbohrung (27) im Kupplungsgehäuse (2) lagert, im Eingriff ist und die Drehbeweglichkeit der Abdeckhaube begrenzt.

20. Sicherheitskupplung nach Anspruch 4, **dadurch gekennzeichnet, dass** die Lagerhülse (4) aus einem elastischen Kunststoff gefertigt und unter Druck auf dem Sperrelement (3) dichtend gehalten ist.

21. Sicherheitskupplung nach Anspruch 1, **dadurch gekennzeichnet, dass** das Sperrelement (3) in der Entkupplungslage gegenüber dem Kupplungsgehäuse (2) einrastend verdrehgesichert ist, durch eine im Sperrelement (3) unter Druck einer Feder (34) verschieblich gelagerte Rasthülse (33), die in einer Rastkerbe (35) im Kupplungsgehäuse (2) eingreift.

22. Sicherheitskupplung nach Anspruch 1, **dadurch gekennzeichnet, dass** das Sperrelement (3) in der Entkupplungslage gegenüber dem Kupplungsgehäuse (2) einrastend verdrehgesichert ist, durch eine im Kupplungsgehäuse unter Federdruck gelagerte Kugel (37), die in dieser Position in einer Senke (40) im Sperrelement eingreift.

## Claims

1. A plug-in safety coupling for compressed air pipes having means (1), which can be plugged in or clamped, for connecting to the compressed air line, comprising a coupling housing (2) having a compressed air feed bore (22) and a blocking element (3), which is supported so as to form a seal having a through-bore (31), into which the means (1) can be inserted so as to form a seal and wherein the coupling housing (2) furthermore encompasses a cut-out track, which serves as a slotted guide (26) for the means (1), said cut-out track making it possible for the means (1) in the coupled state to carry out at least one pivot motion and for the blocking element (3) to be capable of being brought from a conductive position, in which the through-bore (31) of the blocking element (3) communicates with the compressed air feed bore (22) of the coupling housing (2), into a blocking position, in which the blocking element (3) blocks the compressed air feed bore (22), **characterized in that** the blocking element (3) is a sphere, which can be pivoted on all sides, and the slotted guide (26, 261, 262) encompasses at least one shift in direction during the course, wherein the through-bore (31) of the blocking element (3) communicates with at least one ventilation bore (25) in the position of the at least one shift in direction.

2. The plug-in safety coupling according to claim 1, **characterized in that** the coupling housing encompasses a preferably cylindrical inner form and encompasses, on the inside, a dome-shaped end (21) as curved bearing surface for the spherical blocking element (3) at the side, which is located opposite to the inlet side of the compressed air feed bore (22).

3. The plug-in safety coupling according to claim 2, **characterized in that** the coupling housing, at the side located opposite to the compressed air feed bore (22), encompasses an opening (211), the diameter of which is greater than the width of the cut-out track, which serves as slotted guide and thus allows for a limited pivot motion of the means (1) on all sides in the conductive coupled position.

4. The plug-in safety coupling according to claim 1, **characterized in that** a bearing sleeve (4), which forms a bearing surface (43) for the blocking element (3), said bearing surface (43) being formed in a spherically concave manner and encompassing a through-opening (41), the diameter of which corresponds approximately to the linear width of the through-bore (31) in the blocking element (3), is held in the coupling housing (2).

5. The plug-in safety coupling according to claim 1, **characterized in that** at least one annular groove, which runs concentrically around the through-opening (41) and in which an 0-ring is supported for sealing purposes, is molded in the bearing surface (43) of the bearing sleeve (4).

6. The plug-in safety coupling according to claim 1, **characterized in that** a pressure spring, which is compressed in response to the insertion of the means (1) into the blocking element (3) and which presses the means (1) against the inner edge of the slotted guide (26), is supported in the blocking element (3).

7. The plug-in safety coupling according to claim 6, **characterized in that** at least one trough-shaped depression (264), with which a shoulder (12) provided on the means (1) locks in place in the conductive position under pressure of the pressure spring, is molded in the coupling housing (2).

8. The plug-in safety coupling according to claim 6, **characterized in that** at least one further trough-shaped depression, with which a shoulder (12) provided on the means locks in place in the position of the shift in direction under pressure of the pressure spring, is integrally molded in the coupling housing.

9. The plug-in safety coupling according to claim 1, **characterized in that** at least one ventilation bore (25), which communicates with the through-bore (31) of the blocking element (3) in the position of the shift of direction, is present in the coupling housing (2).

10. The plug-in safety coupling according to claim 1, **characterized in that** the coupling housing (2) is provided with a protective cover (5), which is supported so as to be capable of being rotated about the longitudinal axis thereof, which covers the ventilation bore (25) so as to be spaced apart in the position of the shift in direction and which encompasses a slit-shaped recess (53), the width of which corresponds to the width of the slotted guide (26) and which is designed in such a manner that the means (1), which is passed through, allows for all motions in the slotted guide (26) of the coupling housing (2).

11. The plug-in safety coupling according to claim 10, **characterized in that** the protective cover (5) encompasses forming means, which engage with an annular groove at the outside of the coupling housing.

12. The plug-in safety coupling according to claim 11, **characterized in that** the forming means (8) are a retaining ring, a snap ring, an O-ring or resilient catches, which are integrally molded on the protective cover (5).

13. The plug-in safety coupling according to claim 10, **characterized in that** the recess (53) encompasses a curved course about 90° from the tip of the spherically formed protective cover (5) running in a diametric plane.

14. The plug-in safety coupling according to claim 1, **characterized in that** the means (1), which can be plugged in or clamped, is a common compressed air coupling plug.

15. The plug-in safety coupling according to claim 1, **characterized in that** the means is a chuck (100), which is held in or which can be inserted into the blocking element and which is capable of holding a plug-free compressed air line so as to form a seal and in a force-fitting manner.

16. The plug-in safety coupling according to claims 3 and 15, **characterized in that** the chuck (100) is provided with a sleeve-shaped extension (160), wherein longitudinal cuts (150) running in the chuck (100) extend slightly into the extension (160) and the diameter of the extension (160) corresponds to the width of the guide track sections (261, 262).

17. The plug-in safety coupling according to claim 1, **characterized in that** the coupling housing (2) encompasses a trough-shaped depression on the outer side and the plug (1) has a conical locking sleeve (14), which presses the locking sleeve into the trough-shaped depression, which is molded on the outside, against the pressure of a pressure spring (16) when the plug (1) is in the conductive position.

18. The plug-in safety coupling according to claim 17, **characterized in that** the displacement of the locking sleeve (14) is defined by a stop pin (18) at the plug (1), which engages with an elongate hole in the locking sleeve (14).

19. The plug-in safety coupling according to claim 9, **characterized in that** a track (55), which is engaged with a sphere (271) engaging therewith, which is supported in a blind hole (27) in the coupling housing (2), is molded in the protective cover (5) and defines the rotatability of the protective cover.

20. The plug-in safety coupling according to claim 4, **characterized in that** the bearing sleeve (4) is made from an elastic plastic and is held under pressure on the blocking element (3) so as to form a seal.

21. The plug-in safety coupling according to claim 1, **characterized in that** the blocking element (3) is secured against rotation in the uncoupling position so as to lock in place relative to the coupling housing (2), by means of a snap-on sleeve (33), which is supported in the blocking element (3) so as to be capable of being displaced under pressure of a spring (34) and which engages with a snap-on groove (35) in the coupling housing (2).

22. The snap-on safety coupling according to claim 1, **characterized in that** the blocking element (3) is secured against rotation in the uncoupling position so as to lock in place relative to the coupling housing (2), by means of a sphere (37), which is supported in the coupling housing under spring pressure and which engages with a depression (40) in the blocking element in this position.

## Revendications

1. Accouplement de sécurité enfichable pour des conduites d'air comprimé comprenant des moyens (1) enfichables ou de serrage pour le branchement à la conduite d'air comprimé, comprenant un boîtier d'accouplement (2) avec perçage d'arrivée d'air comprimé (22) et un élément de blocage (3) avec perçage traversant (31) placé de manière étanche, dans lequel le moyen (1) peut être introduit de manière étanche et en outre le boîtier d'accouplement (2) présentant une bande découpée servant de guidage coulissant (26) pour le moyen (1), laquelle dans l'état couplé permet au moins un mouvement de pivotement du moyen (1) et ainsi l'élément de blocage (3) peut être amené d'une position conductrice dans laquelle le perçage traversant (31) de l'élément de blocage (3) communique avec le perçage d'arrivée d'air comprimé (22) du boîtier d'accouplement (2), à une position de blocage dans laquelle l'élément de blocage (3) bloque le perçage d'arrivée d'air comprimé (22), **caractérisé en ce que** l'élément de blocage (3) est une sphère pouvant pivoter de tous côtés et le guidage coulissant (26, 261, 262) présente dans son tracé au moins un changement de direction, le perçage traversant (31) de l'élément de blocage (3) communiquant avec au moins un perçage d'aération (25) dans la position de l'au moins un changement de direction.

2. Accouplement de sécurité selon la revendication 1, **caractérisé en ce que** le boîtier d'accouplement présente une forme intérieure de préférence cylindrique et présente sur le côté opposé au côté d'entrée du perçage d'arrivée d'air comprimé (22) une extrémité en forme de coupole (21) à l'intérieur, comme surface d'appui convexe pour l'élément de blocage (3) sphérique.

3. Accouplement de sécurité selon la revendication 2, **caractérisé en ce que** le boîtier d'accouplement présente sur le côté opposé au perçage d'arrivée d'air comprimé (22) une ouverture (211) dont le diamètre est supérieur à la largeur de la bande découpée servant de guidage coulissant et permet ainsi un mouvement de pivotement délimité de tous côtés du moyen (1) dans la position accouplée conductrice.

4. Accouplement de sécurité selon la revendication 1, **caractérisé en ce que** dans le boîtier d'accouplement (2), une chemise de palier (4) est maintenue qui forme une surface de palier (43) sphérique concave pour l'élément de blocage (3), et présente une ouverture traversante (41) dont le diamètre correspond presque au diamètre intérieur du perçage traversant (31) dans l'élément de blocage (3).

5. Accouplement de sécurité selon la revendication 1, **caractérisé en ce que** dans la surface de palier (43) de la chemise de palier (4), au moins une rainure annulaire est formée, laquelle est concentrique autour de l'ouverture traversante (41) et dans laquelle un joint torique est placé pour l'étanchéité.

6. Accouplement de sécurité selon la revendication 1, **caractérisé en ce qu'**un ressort de compression est placé dans l'élément de blocage (3), lequel est comprimé lors de l'introduction du moyen (1) dans l'élément de blocage (3) et appuie le moyen (1) contre le bord intérieur du guidage coulissant (26).

7. Accouplement de sécurité selon la revendication 6, **caractérisé en ce que** dans le boîtier d'accouplement (2) au moins un renfoncement (264) en forme de cuvette est formé, dans lequel un épaulement (12) prévu sur le moyen (1) s'enclique sous la compression du ressort de compression dans la position conductrice.

8. Accouplement de sécurité selon la revendication 6, **caractérisé en ce que** dans le boîtier d'accouplement au moins un autre renfoncement en forme de cuvette est formé, dans lequel un épaulement (12) prévu sur le moyen s'enclique sous la compression du ressort de compression dans la position de changement de direction.

9. Accouplement de sécurité selon la revendication 1, **caractérisé en ce que** dans le boîtier d'accouplement (2), au moins un perçage d'aération (25) est prévu qui communique avec le perçage traversant (31) de l'élément de blocage (3) dans la position de changement de direction.

10. Accouplement de sécurité selon la revendication 1, **caractérisé en ce que** le boîtier d'accouplement (2) est muni d'un capot (5) positionné de manière rotative sur son axe longitudinal, lequel recouvre le perçage d'aération (25) avec un écartement dans la position de changement de direction et présente un évidement (53) fendu qui correspond dans la largeur à la largeur du guidage coulissant (26), de façon à ce que le moyen (1) guidé permette tous les mouvements dans le guidage coulissant (26) du boîtier d'accouplement (2).

11. Accouplement de sécurité selon la revendication 1, **caractérisé en ce que** le capot (5) présente des moyens façonnés qui se mettent en prise dans une rainure annulaire sur le côté extérieur du boîtier d'accouplement.

12. Accouplement de sécurité selon la revendication 11, **caractérisé en ce que** les moyens façonnés (8) sont un circlip, une bague élastique, un joint torique ou des griffes élastiques formées sur le capot (5).

13. Accouplement de sécurité selon la revendication 10, **caractérisé en ce que** l'évidement (53) présente un tracé en forme d'arc à 90° de la pointe du capot sphérique (5) dans un plan diamétral.

14. Accouplement de sécurité selon la revendication 1, **caractérisé en ce que** le moyen (1) enfichable ou pouvant être serré est un connecteur d'accouplement pour air comprimé du commerce.

15. Accouplement de sécurité selon la revendication 1, **caractérisé en ce que** le moyen est une pince de serrage (100) maintenue ou pouvant être introduite dans l'élément de blocage, laquelle peut tenir une conduite d'air comprimé sans connecteur en étanchéité ou par complémentarité de forme.

16. Accouplement de sécurité selon les revendications 3 et 15, **caractérisé en ce que** la pince de serrage (100) est munie d'un prolongement (160) en forme de douille, des sections longitudinales (150) qui parcourent la pince de serrage (100) s'étendant un peu dans le prolongement (160) et le diamètre du prolongement (160) correspondant à la largeur des sections de bande de guidage (261, 262).

17. Accouplement de sécurité selon la revendication 1, **caractérisé en ce que** le boîtier d'accouplement (2) présente sur son côté extérieur un renfoncement en forme de cuvette et que le connecteur (1) possède une douille de verrouillage (14) conique qui appuie la douille de verrouillage dans le renfoncement en forme de cuvette extérieur contre la compression d'un ressort de compression (16) lorsque le connecteur (1) se trouve dans la position conductrice.

18. Accouplement de sécurité selon la revendication 17, **caractérisé en ce que** le chemin de coulissement de la douille de verrouillage (14) est délimité par une tige de butée (18) sur le connecteur (1), laquelle se met en prise dans un trou longitudinal dans la douille de verrouillage (14).

19. Accouplement de sécurité selon la revendication 9, **caractérisé en ce que** dans le capot (5), une bande (55) est formée qui est en prise avec une sphère (271) en prise dans celle-ci, laquelle est positionnée dans un perçage borgne (27) dans le boîtier d'accouplement (2), et délimite la mobilité de rotation du capot.

20. Accouplement de sécurité selon la revendication 4, **caractérisé en ce que** la chemise de palier (4) est fabriquée dans un matériau plastique élastique et est maintenue par compression en étanchéité sur l'élément de blocage (3).

21. Accouplement de sécurité selon la revendication 1, **caractérisé en ce que** l'élément de blocage (3) est encliqueté sans pouvoir tourner par rapport au boîtier d'accouplement (2) dans la position de désaccouplement, par un manchon de crantage (33) placé dans l'élément de blocage (3) de manière mobile par la compression d'un ressort (34), lequel manchon se met en prise dans une encoche de crantage (35) dans le boîtier d'accouplement (2).

22. Accouplement de sécurité selon la revendication 1, **caractérisé en ce que** l'élément de blocage (3) est encliqueté sans pouvoir tourner par rapport au boîtier d'accouplement (2) dans la position de désaccouplement, par une sphère (37) placée dans le boîtier d'accouplement par la compression d'un ressort, qui se met de prise dans cette position dans un creux (40) dans l'élément de blocage.
